# FASCICULE DE BREVET EUROPEEN

(11) **EP 2 084 385 B1**
(45) Date de publication et mention de la délivrance du brevet: **16.07.2014**
(21) Numéro de dépôt: 07848288.2
(22) Date de dépôt: 26.09.2007
(51) Int. Cl.: F02K 1/72

(54) **INVERSEUR DE POUSSÉE À GRILLES POUR MOTEUR À RÉACTION**
SCHUBUMKEHREINHEIT MIT GITTERN FÜR EIN DÜSENTRIEBWERK
THRUST REVERSER WITH GRIDS FOR JET ENGINE

(30) Priorité: 23.10.2006 FR 0609265
(43) Date de publication de la demande: 05.08.2009
(73) Titulaire: Aircelle, 76700 Gonfreville L'Orcher (FR)
(72) Inventeur: VAUCHEL, Guy Bernard, 76610 Le Havre (FR); BAUDU, Pierre André Marcel, 76280 Criquetot l'Esneval (FR)
(74) Mandataire: Jouanneau, Lionel
(86) Numéro de dépôt international: PCT/FR2007/001574
(87) Numéro de publication internationale: WO 2008/049986

(56) Documents cités:
- GB-A- 2 045 179
- US-A- 3 262 268
- US-A- 3 280 562
- US-A- 3 511 055
- US-A- 4 005 822
- US-A- 4 909 442

## Description

L'invention concerne un inverseur de poussée, dit à grilles ou à cascades, pour un moteur à réaction.

Un avion est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'inversion de poussée.

Une nacelle présente généralement une structure tubulaire comprenant une entrée d'air en amont du turboréacteur, une section médiane destinée à entourer une soufflante du turboréacteur, une section aval abritant les moyens d'inversion de poussée et destinée à entourer la chambre de combustion du turboréacteur, et est généralement terminée par une tuyère d'éjection dont la sortie est située en aval du turboréacteur.

Les nacelles modernes sont destinés à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles. Des portes de blocage complémentaires, également appelées volets, activées par le coulissement du capotage, permettent généralement une fermeture de la veine en aval des grilles de manière à optimiser la réorientation du flux froid.

Ces volets sont montés pivotants, par une extrémité amont, sur le capot coulissant entre une position rétractée dans laquelle ils assurent, avec ledit capot mobile, la continuité aérodynamique de la paroi interne de la nacelle et une position déployée dans laquelle, en situation d'inversion de poussée, ils viennent obturer au moins partiellement le canal annulaire en vue de dévier un flux de gaz vers les grilles de déviation découvertes par le coulissement du capot mobile. Le pivotement des volets est guidé par des biellettes rattachées, d'une part, au volet, et d'autre part, à un point fixe de la structure interne délimitant le canal annulaire.

Un premier problème d'une telle configuration réside dans la cinétique du degré d'ouverture des volets qui, en début de phase d'ouverture des capots mobiles, est plus rapide que l'ouverture dudit capot. Ceci a pour conséquence qu'en en début de phase d'ouverture des capots mobiles, la section de passage à travers la nacelle est inférieure à la section de la veine qui est bloquée par les volets. Il s'ensuit une augmentation de la pression dans le moteur, ce qui implique une gestion délicate du régime du turboréacteur dans cette phase transitoire.

Un deuxième problème réside dans les biellettes de guidage traversant la veine et engendrant de ce fait de nombreuses perturbations aérodynamiques dans le flux secondaire.

La fixation des biellettes sur la structure interne constitue un troisième problème. En effet, l'installation de points fixes d'articulation réduit la surface de la structure interne pouvant être utilisée pour un traitement acoustique de ladite structure interne.

Un quatrième problème enfin réside dans le fait que la structure d'inversion de poussée se trouve mécaniquement liée par les biellettes à la structure interne. De ce fait, la structure d'inversion de poussée et la structure interne ne sont pas indépendantes l'une de l'autre, ce qui complique leur dépose lorsque des opérations de maintenance sur la nacelle ou le turboréacteur l'exigent. Il convient de noter que ce problème concerne plus particulièrement des structures internes de type dit « O-duct », c'est-à-dire réalisée à partir d'une seule pièce entourant complètement le turboréacteur contrairement aux structures de type « C-duct » comprenant deux demi-parties réunies entre elles autour du turboréacteur.

Plusieurs solutions ont été mises en place de manière à résoudre un ou plusieurs de ces problèmes.

Le document US 3 262 268, par exemple, décrit un tel inverseur de poussée à grilles, dans lequel une tringlerie de commande du pivotement du volet comprend deux leviers "en ciseaux", dont un levier est articulé sur le capot coulissant et l'autre levier plus en aval est articulé sur des poutres de guidage appartenant à la nacelle externe.

Cette solution évite l'emploi de bielles de liaison entre le volet et la structure interne.

La tringlerie du type à ciseaux, simple et légère, a toutefois pour inconvénient de déployer le volet très rapidement dans le canal annulaire dès le début de la course de recul du capot coulissant, et ne résout donc pas le problème de la différence de cinétique d'ouverture entre le capot mobile et les volets.

Le document US 4 005 822 décrit également un tel inverseur de poussée dans lequel les volets montés pivotants sur le capot mobile et rattachés à une bielle montée sur les moyens d'actionnement du capot mobile de manière à ce que, une fois les moyens d'actionnement en fin de course, ils provoque le recul de la bielle, faisant alors de ce fait pivoter le volet.

Un tel système permet une ouverture des volets retardée par rapport à l'ouverture du capot mobile empêchant ainsi une augmentation de pression dans la veine. Toutefois, l'inconvénient inverse se produit, la section de passage à travers la nacelle, ajoutée à celles des deux flux en jet direct étant trop importante par rapport à la section d'entrée d'air de la nacelle. Une telle situation est également préjudiciable au turboréacteur.

On notera également que les grilles sont intégrées à une virole mobile déplacée avec le capot mobile, ladite virole étant un élément encombrant et impactant la masse de l'ensemble de la nacelle. La présence de cette virole mobile nécessite également des éléments de guidage propres qui viennent impacter la masse de l'ensemble et compliquer la mise en oeuvre du système.

On notera enfin que la vis d'entraînement des volets subit directement les efforts de pression aérodynamique s'exerçant sur les volets, ce qui risque d'entraîner une déformation incompatible avec la fiabilité requise pour un tel système.

On citera enfin le document US 4 909 442 qui prévoit un système d'entraînement complexe par l'intermédiaire de vérins hydrauliques ou pneumatiques rattachés au capot mobile et au volet selon un jeu de vases communicants.

Le document US 35 11 055 constitue également un état de la technique pertinent.

La présente invention vise à éviter ces inconvénients tout en préservant la simplicité et la légèreté des moyens d'entraînement du volet, et consiste à cet effet en un inverseur de poussée pour moteur à réaction, tel que présenté en introduction, et dans lequel en outre un coulisseau d'entraînement du volet est monté mobile dans au moins une glissière de guidage en translation ménagée dans une structure du capot coulissant, et est relié à une extrémité aval du volet par l'intermédiaire d'une bielle d'entraînement, de sorte qu'un mouvement de translation du coulisseau dans sa glissière de guidage s'accompagne d'un pivotement de la bielle et par conséquent du volet, et où des moyens d'actionnement sont prévus pour entraîner le coulisseau en translation dans sa glissière de guidage lorsque le capot coulissant est dans une phase de translation vers l'aval.

L'invention fournit ainsi un inverseur de poussée à grilles fixes, sans bielles de liaison susceptibles de former des obstacles dans le canal annulaire, et dans lequel une manoeuvre de déploiement des volets lors de l'inversion de poussée peut être adaptée au déploiement du capot coulissant afin d'assurer une section totale d'échappement toujours suffisante par rapport à la section d'entrée d'air. La manoeuvre de déploiement des volets pourra notamment être sensiblement différée jusqu'à ce que le capot coulissant ait reculé d'une distance prédéterminée, c'est-à-dire lorsque le capot mobile est dans une phase terminale de sa course de translation vers l'aval.

La charge des volets due aux efforts aérodynamiques sur ceux-ci est supportée, par l'intermédiaire des bielles et coulisseaux d'entraînement, par les glissières de guidage en translation de ces derniers.

Une meilleure efficacité d'inversion de poussée est aisément obtenue en adaptant la longueur de la bielle d'entraînement ainsi que la position de son articulation sur l'extrémité aval du volet de manière à régler l'obturation du canal annulaire par le volet.

Dans une forme de réalisation, le coulisseau d'entraînement forme un tronçon mobile intermédiaire d'un vérin d'actionnement disposé selon un axe longitudinal de l'inverseur, lequel vérin d'actionnement comporte une base tubulaire liée à la nacelle externe en amont de l'inverseur et qui loge le coulisseau d'entraînement ainsi qu'une tige terminale, tous deux montés, indépendamment l'un de l'autre, axialement coulissant dans la base du vérin, une extrémité aval de la tige terminale étant reliée au capot coulissant. Ainsi, le capot coulissant et le volet possèdent un vérin d'actionnement commun.

Dans ce cadre, les glissières de guidage en translation du coulisseau d'entraînement sont par exemple au nombre de deux et disposées de part et d'autre du coulisseau d'entraînement, chacune de ces glissières recevant une extrémité, pourvue de préférence d'un patin ou galet, d'un axe transversal d'articulation de la bielle d'entraînement sur le coulisseau d'entraînement.

L'extrémité de la tige terminale du vérin d'actionnement peut être reliée au capot coulissant par l'intermédiaire d'un axe transversal d'entraînement logé dans une cavité de forme oblongue perpendiculairement à la direction de déplacement du capot, et pratiquée dans une structure du capot coulissant.

Dans une autre forme de réalisation, la glissière de guidage en translation du coulisseau d'entraînement s'étend en longueur dans un plan transversal du capot coulissant et forme un arc de cercle sensiblement concentrique avec la circonférence du capot coulissant, et ladite bielle d'entraînement est articulée sur le volet et sur le coulisseau d'entraînement autour d'axes sensiblement parallèles à un axe longitudinal de l'inverseur.

Ici, le capot coulissant et le volet possèdent ainsi des moyens d'actionnement distincts.

Dans ce cadre, le coulisseau d'entraînement peut avantageusement être relié à une pluralité de volets répartis sur la circonférence du capot coulissant.

Selon une possibilité, le coulisseau d'entraînement présente une portion de longueur dotée d'une denture prévue pour engrener avec un pignon entraîné, en rotation dans un plan transversal du capot coulissant, par un actionneur. Cet actionneur est par exemple électrique et mis sous tension lorsque le capot coulissant atteint une phase terminale de sa course de translation vers l'aval.

Selon une autre possibilité, un vérin d'actionnement du coulisseau d'entraînement, disposé parallèlement à la glissière de guidage du coulisseau, est articulé par une première extrémité sur une structure du capot coulissant et par une seconde extrémité sur le coulisseau d'entraînement.

Le capot coulissant peut comporter une pluralité de volets répartis sur sa circonférence et comportant chacun des bielles d'entraînement de longueurs différentes en vue de générer des effets de tourbillon permettant d'améliorer la traînée en sortie de l'ouverture à grilles.

La présente invention se rapport également à une nacelle de turboréacteur double flux, caractérisé en ce qu'elle comprend au moins un inverseur de poussée tel que décrit précédemment.

D'autres avantages et caractéristiques de l'invention ressortiront à la lecture de la description suivante réalisée à titre d'exemple et en référence aux dessins annexés dans lesquels:
- la figure 1 est une vue partielle schématique, en coupe longitudinale selon un plan passant par des grilles de déviation, d'un inverseur de poussée à grilles selon une première forme de réalisation de l'invention, en position fermée;
- la figure 2 est une vue partielle schématique, en coupe longitudinale selon un plan passant par un vérin d'actionnement du capot coulissant et d'un volet d'inversion, de l'inverseur de poussée de la figure 1 durant une phase de déplacement du capot coulissant vers l'aval (pour découvrir les grilles);
- la figure 3 est une vue analogue à la figure 2 durant une phase de déploiement du volet pour obturer le canal annulaire d'écoulement;
- la figure 4 est une vue analogue aux figures 2 et 3 en situation d'inversion de poussée;
- la figure 5 est une vue en coupe selon la ligne V-V de la figure 4;
- la figure 6 est une vue en coupe selon la ligne VI-VI de la figure 5;
- la figure 7 est une vue schématique en coupe transversale d'un inverseur de poussée selon une deuxième forme de réalisation de l'invention, en position fermée;
- la figure 8 est une vue partielle schématique en coupe longitudinale, analogue à la figure 1, de l'inverseur de poussée de la figure 7;
- la figure 9 est une vue agrandie d'un détail de la figure 8;
- la figure 10 est une vue analogue à la figure 8 durant une phase de déploiement du volet pour obturer le canal annulaire d'écoulement;
- la figure 11 est une vue analogue à la figure 7 en situation d'inversion de poussée;
- la figure 12 est une vue schématique partielle en coupe transversale d'un inverseur de poussée selon une troisième forme de réalisation de l'invention.

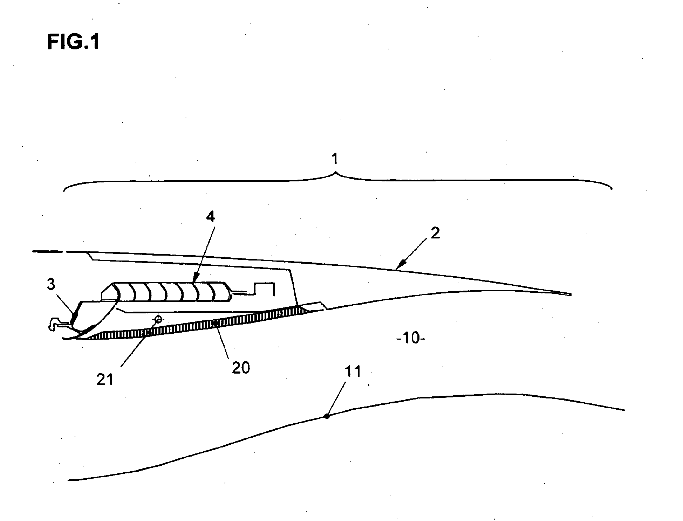

De manière connue en soi, l'inverseur de poussée 1 représenté sur les figures 1 à 12 est associé à un turboréacteur à double flux (non représenté) et comprend une nacelle externe qui définit avec une structure interne concentrique 11 un canal annulaire d'écoulement 10 pour une veine de flux secondaire.

Un capot 2 coulissant longitudinalement est constitué de deux parties hémicylindriques montées sur la nacelle de manière à pouvoir coulisser le long de glissières (non représentées).

Une ouverture munie de grilles de déviation 4 fixes est ménagée dans la nacelle externe de l'inverseur de poussée 1. Cette ouverture, en situation de poussée directe des gaz, est fermée par le capot coulissant 2 et elle est dégagée, en situation d'inversion de poussée, par un déplacement en translation longitudinale vers l'aval (par référence au sens d'écoulement des gaz) du capot coulissant 2.

Une pluralité de volets d'inversion 20, répartis sur la circonférence du capot 2, sont chacun montés pivotant, par une extrémité amont autour d'un axe d'articulation 21, sur le capot coulissant 2 entre une position rétractée et une position déployée dans laquelle, en situation d'inversion de poussée, ils obturent le canal annulaire 10 en vue de dévier un flux de gaz vers l'ouverture à grilles 4. Un joint d'étanchéité (non représenté) est prévu sur le pourtour de chaque volet 20 afin d'isoler le flux circulant dans le canal annulaire 10 du flux externe à la nacelle.

Lors du fonctionnement du turboréacteur en poussée directe (voir figure 1), le capot coulissant 2 forme tout ou partie d'une partie aval de la nacelle, les volets 20 étant alors rétractés dans le capot coulissant 2 qui obture l'ouverture à grilles 4.

Pour inverser la poussée du turboréacteur, le capot coulissant 2 est déplacé en position aval et les volets 20 pivotent en position d'obturation de manière à dévier le flux secondaire vers les grilles 4 et de former un flux inversé guidé par les grilles 4.

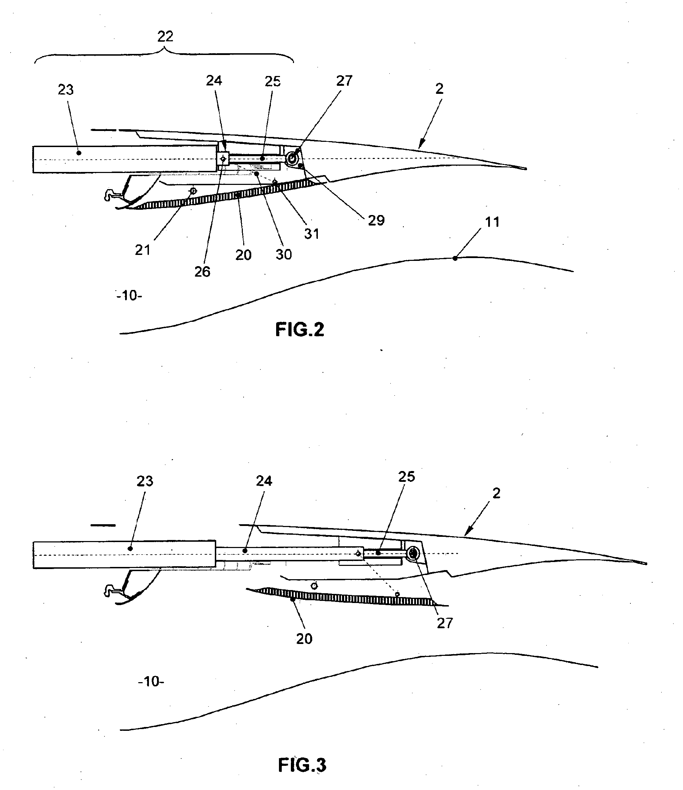

Comme indiqué sur les figures 2 à 6, un coulisseau 24 d'entraînement d'un volet 20 (ou de deux volets 20 placés de part et d'autre du coulisseau 24) est monté mobile dans deux glissières latérales 33 de guidage en translation ménagée dans une structure du capot coulissant 2.

Le coulisseau d'entraînement 24 est relié à une extrémité aval du volet 20 par l'intermédiaire d'une bielle d'entraînement 30 articulée sur le volet autour d'un axe 31 et sur le coulisseau 24 autour d'un axe transversal 26, de sorte qu'un mouvement de translation du coulisseau 24 dans ses glissières de guidage 33 s'accompagne d'un pivotement de la bielle 30 et par conséquent du volet 20.

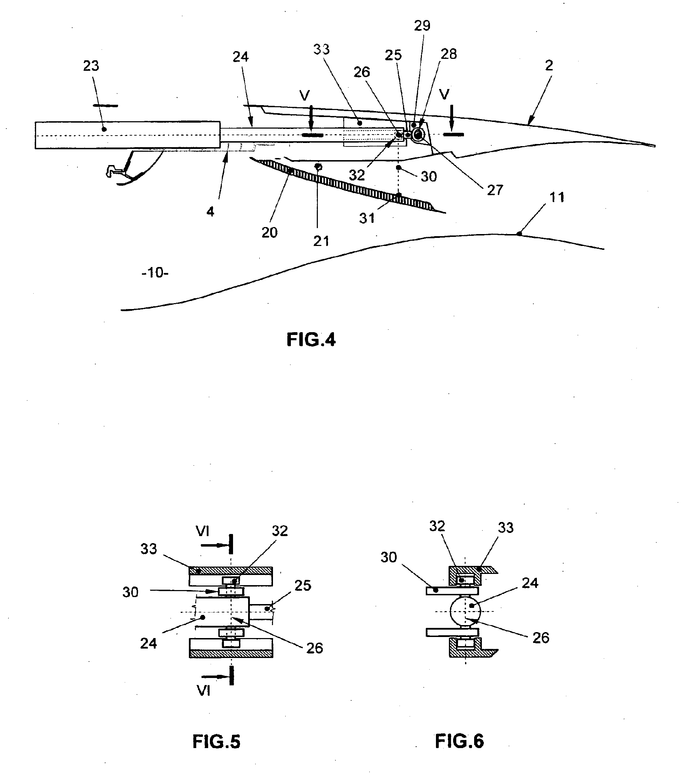

Les glissières de guidage 33 (voir figures 5 et 6) sont disposées de part et d'autre du coulisseau d'entraînement 24, chacune recevant une extrémité, pourvue d'un patin ou galet 32, de l'axe transversal 26 d'articulation de la (ou des) bielle(s) d'entraînement 30 sur une extrémité du coulisseau d'entraînement 24.

Ici, le coulisseau d'entraînement forme un tronçon mobile intermédiaire 24 d'un vérin d'actionnement 22 "télescopique" disposé selon un axe longitudinal de l'inverseur.

Ce vérin d'actionnement 22, pneumatique, électrique ou hydraulique, comporte une base tubulaire 23 liée, fixe ou rotulée, à la nacelle externe en amont (en 3) de l'inverseur 1. La base 23 loge le coulisseau d'entraînement 24 ainsi qu'une tige terminale 25, tous deux montés, indépendamment l'un de l'autre, axialement coulissant dans la base 23 du vérin 22.

Une extrémité aval de la tige terminale 25 est reliée au capot coulissant 2 par l'intermédiaire d'un axe transversal d'entraînement 27 logé dans une cavité 28 de forme oblongue perpendiculairement à la direction de déplacement du capot 2, et pratiquée dans une ferrure 29 du capot coulissant 2. Cette cavité 28 permet d'éviter un alignement de points hyperstatiques entre la base 23 du vérin 22, l'axe de pivotement 26 à l'extrémité du tronçon mobile 24 et l'axe d'entraînement 27 à l'extrémité de la tige 25.

Le vérin 22 est commandé de manière à entraîner le coulisseau 24 en translation dans ses glissières de guidage 33 lorsque le capot coulissant 2 est dans une phase terminale de sa course de translation vers l'aval.

Il importe en effet de pouvoir évacuer l'air capté par l'entrée du turboréacteur de manière égale en poussée directe ou inversée, et plus particulièrement lors de l'inversion de poussée durant laquelle la réduction de la section du canal 10 par les volets 20 doit pouvoir être compensée par l'augmentation de la section de l'accès offert en amont de l'inverseur par les grilles de déviation 4 lorsqu'elles sont découvertes par le recul du capot mobile 2.

Ainsi, dans une première phase de l'inversion de poussée (voir figure 2), le déploiement de la tige 25 hors du vérin 22 est engagé de manière à déplacer le capot 2 vers l'aval, tandis que le tronçon 24 reste rétracté dans le base 23 du vérin 22 et que le ou les volets 20 restent donc rétractés dans le capot coulissant 2.

Lorsque le capot coulissant 2 atteint une phase terminale de sa course de translation vers l'aval (voir figure 3), le déploiement du tronçon intermédiaire 24 hors de la base 23, jusqu'ici différé, est engagé et effectué plus rapidement que celui de la tige 25. Le déplacement de l'axe 26 dans les glissières 33 est répercuté sur le volet 20 par l'intermédiaire de la bielle 30.

La course de déploiement du tronçon 24 peut se terminer après celle de la tige 25 ou en même temps. En situation d'inversion de poussée (voir figure 4), les axes 26 et 27 se sont rejoints en aval. Bien évidemment, la présente invention n'est pas limitée à une séquence d'actionnement particulière du tronçon 24 et de la tige 25, leurs courses respectives devant être réalisées de manière à ce que la pression aérodynamique amont soit maintenue sensiblement constante au cours du processus d'inversion de poussée.

Lors du retour en poussée directe, le ou les volets 20 peuvent être totalement ou partiellement rétractés avant ou pendant le déplacement vers l'amont du capot mobile 2 pour recouvrir les grilles 4.

Les glissières latérales de guidage 33 assurent une reprise d'effort qui permet d'éviter un risque de flambage du vérin 22 dû à la pression aérodynamique sur les volets 20.

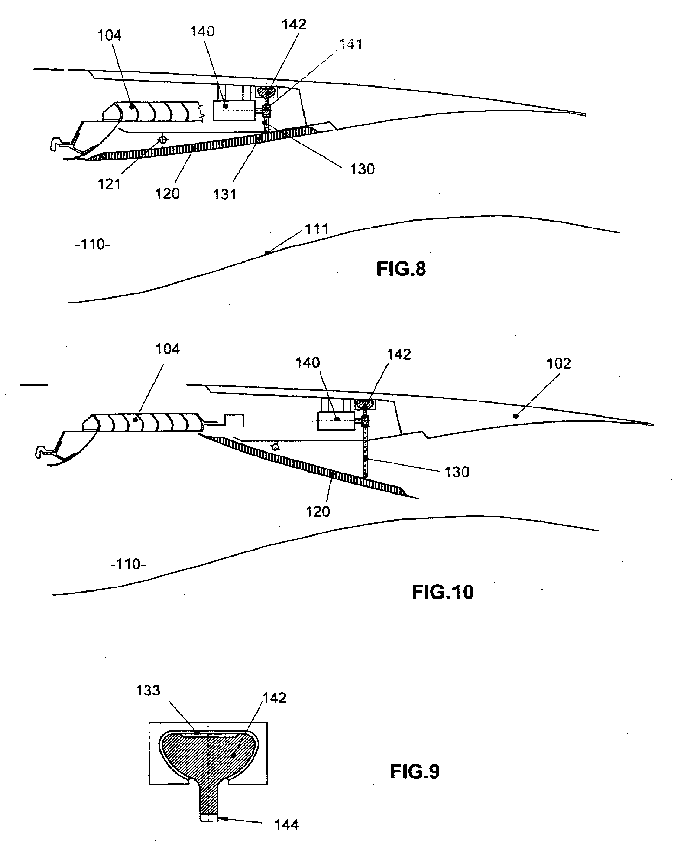

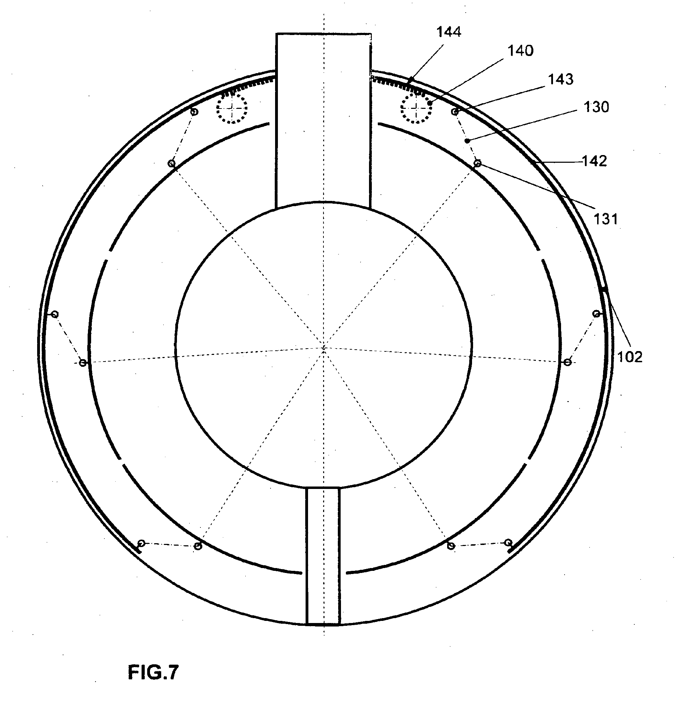

Dans la variante de réalisation illustrée sur les figures 7 à 11, les moyens d'actionnement du capot coulissant 102 et du volet 120 sont distincts. Le déplacement du capot mobile 102 est commandé par un vérin (non représenté) pneumatique, électrique ou hydraulique. Chaque partie hémicylindrique du capot 102 comporte une glissière 133 (voir figure 9) s'étendant en longueur dans un plan transversal, pour le guidage en translation d'un coulisseau d'entraînement 142.

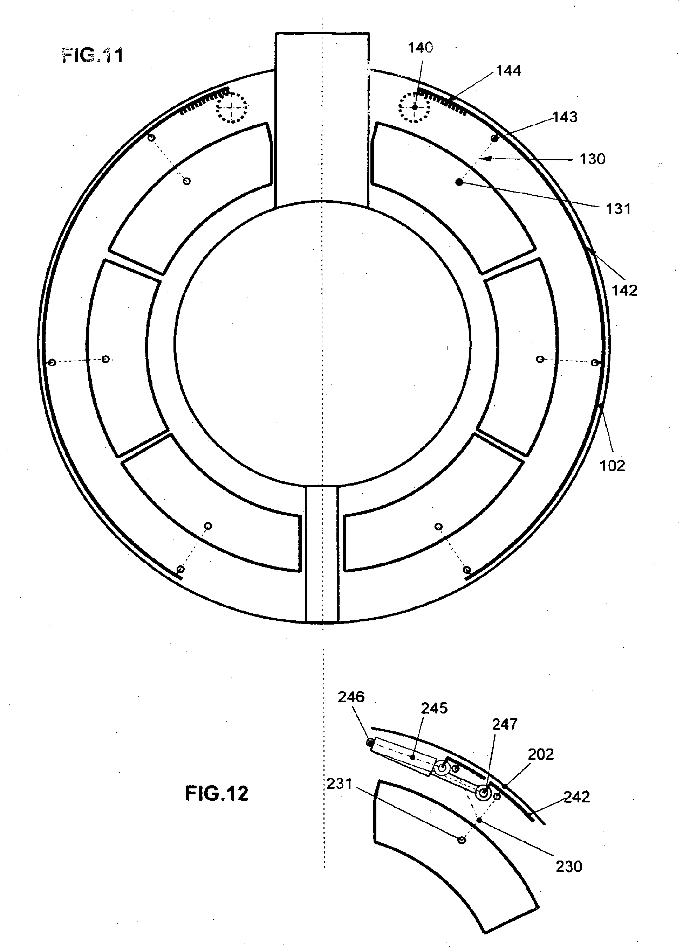

La glissière 133 forme un arc de cercle sensiblement concentrique avec la circonférence du capot coulissant 102 (voir figures 7 et 11). Un même coulisseau d'entraînement 142 est relié, par l'intermédiaire de bielles 130 articulées autour d'axes 131 et 143 parallèles à l'axe longitudinal de l'inverseur, à plusieurs volets d'inversion 120 répartis sur la circonférence de chaque partie hémicylindrique du capot 102.

Le coulisseau d'entraînement 142 présente une portion de longueur dotée d'une denture 144 prévue pour engrener avec un pignon 141 entraîné, en rotation dans un plan transversal du capot coulissant 102, par un actionneur électrique 140. Ainsi, le déplacement du coulisseau 142 dans sa glissière 133 provoque un pivotement des bielles d'entraînement 130 et des volets 120 vers la position d'obturation du canal annulaire 110.

Un ou plusieurs connecteurs d'alimentation de puissance (non représentés) sont disposés de manière à mettre l'actionneur électrique 140 sous tension lorsque le capot coulissant 102 atteint une phase terminale de sa course de translation vers l'aval.

Le coulisseau 142 peut être maintenu en position de repos (en poussée directe) par un verrou dédié ou par le pignon 141 lui-même.

La figure 12 illustre encore une autre variante de réalisation qui s'apparente à la forme de réalisation précédente. Ici, le déplacement du coulisseau d'entraînement 242 dans sa glissière est assuré par un vérin d'actionnement 245 de préférence électrique disposé parallèlement à la glissière de guidage du coulisseau 242, et articulé par une première extrémité (en 246) sur une structure du capot coulissant 202 et par une seconde extrémité (en 247) sur le coulisseau d'entraînement 242.

L'actionnement du vérin 245 en phase terminale de la course de recul du capot coulissant 202 entraîne le coulisseau 142 dans sa glissière et provoque ainsi un pivotement de la bielle 230 et du volet 220 vers la position d'obturation du canal annulaire.

L'invention permet de modifier facilement la longueur d'une bielle d'entraînement 30, 130 ou 230 ou la position de son axe d'articulation 31, 131 ou 231 sur le volet d'inversion correspondant afin d'ajuster l'efficacité de l'obturation du canal annulaire par le volet lors de l'inversion de poussée. Il est aussi possible de disposer des bielles d'entraînement 30, 130 ou 230 de longueurs différentes pour les différents volets, en vue de créer des chicanes au flux contournant les volets (les volets pouvant avoir des parties en recouvrement) pour ajouter aux fuites directes des effets de tourbillons améliorant la traînée à la sortie de la section d'éjection.

Enfin, les grilles de déviation 4, 104 étant fixes et placées en amont de la structure de l'inverseur, celles ci sont placées dans un environnement de lignes aérodynamiques épaisses. La définition du diamètre interne des grilles 4, 104 est facile à gérer notamment pour réduire la longueur de déplacement du capot coulissant 2, 102, 202 car la section totale d'échappement par les grilles 4, 104 est un multiple de leur longueur et du diamètre interne. On comprendra que pour une même section d'échappement, plus le diamètre est grand plus la longueur de la grille est réduite.

Comme mentionné dans le cas où un même actionneur 22 commande le capot mobile 2 et les volets 20, il convient de noter que les modes de réalisations précédemment décrits dans lesquels le capot mobile 2 et les volets 20 sont équipés d'actionneurs distincts ne sont pas non plus limités à une séquence d'actionnement particulière desdits actionneurs, ceux-ci devant être commandés de manière à ce que la pression aérodynamique amont soit maintenue sensiblement constante au cours du processus d'inversion de poussée.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Inverseur de poussée (1) pour nacelle de turboréacteur double flux comprenant, d'une part, des moyens de déviation (4, 104) d'au moins une partie d'un flux d'air du turboréacteur, et d'autre part, au moins un capot mobile (2, 102, 202) en translation selon une direction sensiblement parallèle à un axe longitudinal de la nacelle et présentant au moins un volet (20, 120) monté pivotant par une extrémité amont sur le capot mobile, ledit capot mobile étant apte à passer alternativement d'une position de fermeture dans laquelle il assure, le volet étant en position rétractée, la continuité aérodynamique de la nacelle et couvre les moyens de déviation, à une position d'ouverture dans laquelle il ouvre un passage dans la nacelle et découvre les moyens de déviation, le volet étant en position pivotée dans laquelle il est apte à venir obturer une partie d'un canal annulaire (10, 110) de la nacelle,
**caractérisé en ce qu'**un coulisseau (24; 142; 242) d'entraînement du volet (20; 120) est monté mobile dans au moins une glissière (33; 133) de guidage en translation ménagée dans une structure du capot coulissant (2; 102; 202), et est relié à une extrémité aval du volet (20; 120) par l'intermédiaire d'une bielle d'entraînement (30; 130; 230), de sorte qu'un mouvement de translation du coulisseau (24; 142; 242) dans sa glissière de guidage (33; 133) s'accompagne d'un pivotement de la bielle (30; 130; 230) et par conséquent du volet (20; 120), et **en ce que** des moyens d'actionnement (22; 140; 245) sont prévus pour entraîner le coulisseau (24; 142; 242) en translation dans sa glissière de guidage (33; 133) lorsque le capot coulissant (2; 102; 202) est dans une phase de translation vers l'aval.

2. Inverseur de poussée selon la revendication 1, **caractérisé en ce que** les moyens d'actionnement (22; 140; 245) sont prévus pour entraîner le coulisseau (24; 142; 242) en translation dans sa glissière de guidage (33; 133) lorsque le capot coulissant (2; 102; 202) est dans une phase terminale de sa course en translation vers l'aval

3. Inverseur de poussée selon l'une quelconque des revendications 1 ou 2, **caractérisé en ce que** le coulisseau d'entraînement forme un tronçon mobile intermédiaire (24) d'un vérin d'actionnement (22) disposé selon un axe longitudinal de l'inverseur, lequel vérin d'actionnement (22) comporte une base tubulaire (23) liée à la nacelle externe en amont de l'inverseur (1) et qui loge le coulisseau d'entraînement (24) ainsi qu'une tige terminale (25), tous deux montés, indépendamment l'un de l'autre, axialement coulissant dans la base (23) du vérin (22), une extrémité aval de la tige terminale (25) étant reliée au capot coulissant (2).

4. Inverseur de poussée selon la revendication 3, **caractérisé en ce que** l'extrémité de la tige terminale (25) du vérin d'actionnement (22) est reliée au capot coulissant (2) par l'intermédiaire d'un axe transversal d'entraînement (27) logé dans une cavité (28) de forme oblongue perpendiculairement à la direction de déplacement du capot (2), et pratiquée dans une structure (29) du capot coulissant (2).

5. Inverseur de poussée selon la revendication 3 ou 4, **caractérisé en ce que** les glissières (33) de guidage en translation du coulisseau d'entraînement (24) sont au nombre de deux et disposées de part et d'autre du coulisseau d'entraînement (24), chacune de ces glissières (33) recevant une extrémité, pourvue de préférence d'un patin ou galet (32), d'un axe transversal (26) d'articulation de la bielle d'entraînement (30) sur le coulisseau d'entraînement (24).

6. Inverseur de poussée selon l'une quelconque des revendications 1 ou 2, **caractérisé en ce que** la glissière (133) de guidage en translation du coulisseau d'entraînement (142; 242) s'étend en longueur dans un plan transversal du capot coulissant (102; 202) et forme un arc de cercle sensiblement concentrique avec la circonférence du capot coulissant (102; 202), et **en ce que** ladite bielle d'entraînement (130; 230) est articulée sur le volet (120) et sur le coulisseau d'entraînement (142; 242) autour d'axes (131, 143; 231, 243) sensiblement parallèles à un axe longitudinal de l'inverseur.

7. Inverseur de poussée selon la revendication 6, **caractérisé en ce que** le coulisseau d'entraînement (142; 242) est relié à une pluralité de volets (120) répartis sur la circonférence du capot coulissant (102; 202).

8. Inverseur de poussée selon la revendication 6 ou 7, **caractérisé en ce que** le coulisseau d'entraînement (142) présente une portion de longueur dotée d'une denture (144) prévue pour engrener avec un pignon (141) entraîné, en rotation dans un plan transversal du capot coulissant (102), par un actionneur (140).

9. Inverseur de poussée selon la revendication 8, **caractérisé en ce que** l'actionneur (140) est électrique, et mis sous tension lorsque le capot coulissant (102) atteint une phase terminale de sa course de translation vers l'aval.

10. Inverseur de poussée selon la revendication 6 ou 7, **caractérisé en ce qu'**un vérin (245) d'actionnement du coulisseau d'entraînement (242), disposé parallèlement à la glissière de guidage du coulisseau (242), est articulé par une première extrémité (en 246) sur une structure du capot coulissant (202) et par une seconde extrémité (en 247) sur le coulisseau d'entraînement (242).

11. Inverseur de poussée selon l'une des revendications 1 à 10, **caractérisé en ce que** le capot coulissant (2; 102; 202) comporte une pluralité de volets (20; 120) répartis sur sa circonférence et comportant chacun des bielles d'entraînement (30; 130; 230) de longueurs différentes.

12. Nacelle de turboréacteur double flux, **caractérisé en ce qu'**elle comprend au moins un inverseur de poussée selon l'une quelconque des revendications 1 à 11.

## Patentansprüche

1. Schubumkehr (1) für eine zweiflutige Turbinengondel, die einerseits Vorrichtungen zur Umleitung (4, 104) zumindest eines Teils des Luftstrahls der Turbine umfasst, und andererseits zumindest eine längsverschiebbare Abdeckhaube (2, 102, 202), die in einer Richtung verschoben werden kann, die in etwa parallel zu einer Längsachse der Gondel verläuft, und die zumindest eine Klappe (20, 120) aufweist, die an einem oberen Ende auf der beweglichen Abdeckhaube schwenkbar montiert ist, wobei sich die besagte bewegliche Abdeckhaube dazu eignet, alternativ von einer geschlossenen Stellung, in der sie, da sich die Klappe in einer eingezogenen Stellung befindet, für die aerodynamische Kontinuität der Gondel sorgt und die Umleitvorrichtung abdeckt, in eine geöffnete Stellung überzugehen, in der sie einen Durchlass in der Gondel öffnet, und die Umleitvorrichtungen offen legt, wobei sich die Klappe in der geschwenkten Stellung befindet, in der sie in der Lage ist, einen Teil eines ringförmigen Kanals (10, 110) der Gondel zu verschließen,
**dadurch gekennzeichnet, dass** ein Schieber (24, 142, 242) zum Antreiben der Klappe (20, 120) zur Führung in Längsrichtung in zumindest einer Gleitschiene (33, 133) beweglich montiert ist, die in einer Struktur der gleitenden Abdeckhaube (2, 102, 202) angeordnet ist, und über ein Antriebspleuel (30, 130, 230) mit einem unteren Ende der Klappe (20, 120) verbunden ist, sodass eine längs gerichtete Bewegung des Schiebers (24, 142, 242) in seiner Führungsgleitschiene (33, 133) von einem Schwenk des Antriebspleuels (30, 130, 230), und deshalb auch der Klappe (20, 120) begleitet wird, und dadurch, dass Betätigungseinrichtungen (22, 140, 245) vorgesehen sind, um den Schieber (24, 142, 242) in seiner Führungsgleitschiene (33, 133) in Längsrichtung anzutreiben, wenn die gleitende Abdeckhaube (2, 102, 202) in einer Längsbewegungsphase nach unten ist.

2. Schubumkehr nach Anspruch 1, **dadurch gekennzeichnet, dass** die Betätigungseinrichtungen (22, 140, 245) vorgesehen sind, um den Schieber (24, 142, 242) in seiner Führungsgleitschiene (33, 133) in Längsrichtung anzutreiben, wenn sich die gleitende Abdeckhaube (2, 102, 202) in einer Abschlussphase ihrer Längsbewegung nach unten ist.

3. Schubumkehr nach irgendeinem der Ansprüche 1 oder 2, **dadurch gekennzeichnet, dass** der Antriebsschieber ein bewegliches Zwischenteilstück (24) eines Betätigungszylinders (22) bildet, der gemäß einer Längsachse der Umkehr angeordnet ist, und dieser Betätigungszylinder (22) eine rohrförmige Basis (23) enthält, die vor der Umkehr (1) mit der äußeren Gondel verbunden ist, und die den Antriebsschieber (24), sowie eine Abschlussstange (25) aufnimmt, wobei beide unabhängig voneinander und in axialer Richtung gleitend in der Basis (23) des Zylinders (22) montiert sind, wobei ein unteres Ende der Abschlussstange (25) mit der gleitenden Abdeckhaube (2) verbunden ist.

4. Schubumkehr nach Anspruch 3, **dadurch gekennzeichnet, dass** das Ende der Abschlussstange (25) des Betätigungszylinders (22) über eine Querantriebsachse (27) mit der gleitenden Abdeckhaube (2) verbunden ist, die in einer längsförmigen Vertiefung (28) eingelegt ist, die senkrecht zur Fahrtrichtung der Abdeckhaube (2) verläuft und in eine Struktur (29) der gleitenden Abdeckhaube (2) eingearbeitet ist.

5. Schubumkehr nach Anspruch 3 oder 4, **dadurch gekennzeichnet, dass** die Gleitschiene (33) zur Längsführung des Antriebsschiebers (24) paarweise beiderseits des Antriebsschiebers (24) angeordnet sind, und jede der Gleitschienen (33) ein Ende aufnimmt, das vorzugsweise mit einem Schuh oder einer Kugelrolle (32), einer Querachse (26) zum Artikulieren des Antriebspleuels (30) auf dem Antriebsschieber (24) versehen ist.

6. Schubumkehr nach irgendeinem der Ansprüche 1 oder 2, **dadurch gekennzeichnet, dass** sich die Gleitschiene (133) zur Längsführung des Antriebsschiebers (142, 242) in der Länge über eine sich quer erstreckende Ebene der gleitenden Abdeckhaube (102, 202) erstreckt, und einen Kreisbogen bildet, der in etwa konzentrisch mit dem Umfang der gleitenden Abdeckhaube (102, 202) verläuft, und dadurch, dass das besagte Antriebspleuel (130, 230) auf der Klappe (120) und auf dem Antriebsschieber (142, 242) um die Achsen (131, 143, 231, 243) artikuliert, die in etwa parallel zu einer Längsachse der Umkehr verlaufen.

7. Schubumkehr nach Anspruch 6, **dadurch gekennzeichnet, dass** der Antriebsschieber (142, 242) mit einer Vielzahl von Klappen (120) verbunden ist, die über den Umfang der gleitenden Abdeckhaube (102, 202) verteilt sind.

8. Schubumkehr nach Anspruch 6 oder 7, **dadurch gekennzeichnet, dass** der Antriebsschieber (142) einen Längenabschnitt aufweist, der mit einer Verzahnung (144) versehen ist, die vorgesehen ist, um in ein Ritzel (141) einzugreifen, das durch ein Stellorgan (140) in einer sich quer erstreckenden Ebene der gleitenden Abdeckhaube (102) in Drehung versetzt wird.

9. Schubumkehr nach Anspruch 8 **dadurch gekennzeichnet, dass** das Stellorgan (140) elektrisch ist, und eingeschaltet wird, wenn die gleitende Abdeckhaube (102) in einer Abschlussphase ihrer Längsbewegung nach unten ist.

10. Schubumkehr nach Anspruch 6 oder 7, **dadurch gekennzeichnet, dass** ein Betätigungszylinder (245) des Antriebsschiebers (242), der parallel zur Führungsgleitschiene des Antriebsschiebers (242) angeordnet ist, über ein erstes Ende (in 246) auf einer Struktur der gleitenden Abdeckhaube (202), und über ein zweites Ende (in 247) auf dem Antriebsschieber (242) artikuliert wird.

11. Schubumkehr nach einem der Ansprüche 1 bis 10, **dadurch gekennzeichnet, dass** die gleitende Abdeckhaube (2, 102, 202) eine Vielzahl von Klappen (20, 120) umfasst, die über ihren Umfang verteilt sind, und jeweils Antriebspleuel (30, 130, 230) in unterschiedlichen Längen aufweist.

12. Zweiflutige Turbinengondel, **dadurch gekennzeichnet, dass** sie zumindest eine Schubumkehr nach irgendeinem der Ansprüche 1 bis 11 enthält.

## Claims

1. A thrust reverser (1) for a double-flow turbojet engine nacelle comprising, on the one hand, means (4, 104) for diverting at least a portion of an air flow of the turbojet engine and, on the other hand, at least a movable cowl (2, 102, 202) in translation along a direction substantially parallel to a longitudinal axis of the nacelle and having at least one flap (20, 120) pivotally mounted by an upstream end on the movable cowl, said movable cowl being adapted to shift alternately from a closing position wherein it ensures, the flap being in the retracted position, the aerodynamic continuity of the nacelle and covers the diverting means, to an opening position wherein it opens a passage in the nacelle and uncovers the diverting means, the flap being in a pivoted position wherein it is adapted to obstructs a portion of an annular channel (10, 110) of the nacelle,
**characterized in that** a slide (24; 142; 242) driving the flap (20; 120) is movably mounted in at least a guide rail in translation (33; 133) arranged in a structure of the sliding cowl (2; 102; 202), and is connected to a downstream end of the flap (20; 120) via a driving rod (30; 130; 230), such that a translational movement of the slide (24; 142; 242) in its guide rail (33; 133) is accompanied with a pivoting of the rod (30; 130; 230) and therefore of the flap (20; 120), and **in that** actuating means (22; 140; 245) are provided for driving the slide (24; 142; 242) in translation in its guide rail (33; 133) when the sliding cowl (2; 102; 202) is in a translation phase downstream.

2. The thrust reverser according to claim 1, **characterized in that** the actuating means (22; 140; 245) are provided for driving the slide (24; 142; 242) in translation in its guide rail (33; 133) when the sliding cowl (2; 102; 202) is in a terminal phase of its translational stroke downstream.

3. The thrust reverser according to any one of claims 1 or 2, **characterized in that** the driving slide forms an intermediate movable section (24) of an actuating cylinder (22) disposed along a longitudinal axis of the reverser, which actuating cylinder (22) includes a tubular base (23) connected to the outer nacelle upstream of the reverser (1) and houses the driving slide (24) as well as a terminal pin (25), both mounted, independently of one another, axially sliding in the base (23) of the cylinder (22), a downstream end of the terminal pin (25) being connected to the sliding cowl (2).

4. The thrust reverser according to claim 3, **characterized in that** the end of the terminal pin (25) of the actuating cylinder (22) is connected to the sliding cowl (2) via a driving transverse axis (27) housed in a cavity (28) of oblong shape perpendicularly to the direction of the cowl (2) movement, and made in a structure (29) of the sliding cowl (2).

5. The thrust reverser according to claim 3 or 4, **characterized in that** the rails (33) for guiding in translation the driving slide (24) are two in number and disposed one on either side of driving slide (24), each of these rails (33) receiving one end, preferably provided with a runner or roller (32), of a transverse hinge (26) for hinging the driving rod (30) on the driving slide (24).

6. The thrust reverser according to any one of claims 1 or 2, **characterized in that** the rail (33) for guiding in translation the driving slide (142; 242) extends lengthwise in a transverse plane of the sliding cowl (102; 202) and forms a circular arc substantially concentric with the circumference of the sliding cowl (102; 202), and **in that** said driving rod (130; 230) is hinged on the flap (120) and on the driving slide (142; 242) around axes (131, 143; 231; 243) substantially parallel to a longitudinal axis of the reverser.

7. The thrust reverser according to claim 6, **characterized in that** the driving slide (142; 242) is connected to a plurality of flaps (120) distributed over the circumference of the sliding cowl (102; 202).

8. The thrust reverser according to claim 6 or 7, **characterized in that** the driving slide (142) has a length portion provided with a toothing (144) provided for meshing with a pinion (141) rotationally driven in a transverse plane of the sliding cowl (102), by an actuator (140).

9. The thrust reverser according to claim 8, **characterized in that** the actuator (140) is electric, and energized when the sliding cowl (102) reaches a terminal phase of its translational stroke downstream.

10. The thrust reverser according to claim 6 or 7, **characterized in that** an actuating cylinder (245) of the driving slide (242), disposed parallel to the guide rail of the slide (242), is hinged by a first end (in 246) on a structure of the sliding cowl (202) and by a second end (in 247) on the driving slide (242).

11. The thrust reverser according to any of claims 1 to 10, **characterized in that** the sliding cowl (2; 102; 202) comprises a plurality of flaps (20; 120) distributed over its circumference and each including driving rods (30; 130; 230) of different lengths.

12. A double-flow turbojet engine nacelle, **characterized in that** it comprises at least a thrust reverser according to any one of claims 1 to 11.
